(19) Europäisches Patentamt
European Patent Office
Office européen des brevets

(11) Veröffentlichungsnummer : **0 158 953**
**B1**

(12) # EUROPÄISCHE PATENTSCHRIFT

(45) Veröffentlichungstag der Patentschrift : **13.04.88**

(21) Anmeldenummer : **85104249.9**

(22) Anmeldetag : **09.04.85**

(51) Int. Cl.⁴ : **C 07 C 87/40**, C 07 C 85/24, C 08 G 59/50

(54) **Neue Triamine, ein Verfahren zu ihrer Herstellung und ihre Verwendung als Vernetzer bzw. Härter für Epoxidgruppen oder Isocyanatgruppen aufweisende Kunststoffe bzw. Kunststoffvorläufer.**

(30) Priorität : **19.04.84 DE 3414804**

(43) Veröffentlichungstag der Anmeldung : **23.10.85 Patentblatt 85/43**

(45) Bekanntmachung des Hinweises auf die Patenterteilung : **13.04.88 Patentblatt 88/15**

(84) Benannte Vertragsstaaten : **BE CH DE FR GB IT LI**

(56) Entgegenhaltungen :
**EP-A- 0 104 396**
**EP-A- 0 105 146**
**DE-A- 2 515 486**
**US-A- 2 606 924**
**PATENT ABSTRACTS OF JAPAN, Band 1, Nr. 12 (C-76), 22. März 1977, Seite 594 C 76; & JP - A - 51 125 363 (UBE KOSAN) 01.11.1976**

(73) Patentinhaber : **BAYER AG**
**Konzernverwaltung RP Patentabteilung**
**D-5090 Leverkusen 1 Bayerwerk (DE)**

(72) Erfinder : **Knöfel, Hartmut, Dr.**
**Dülmener Weg 21**
**D-5068 Odenthal-Erberich (DE)**
Erfinder : **Penninger, Stefan, Dr.**
**Hahnenstrasse 106**
**D-5024 Pulheim (DE)**
Erfinder : **Brockelt, Michael**
**Neuenhauser Weg 1**
**D-5060 Bergisch Gladbach 2 (DE)**
Erfinder : **Hammen, Günter, Dr.**
**Bunzlauer Weg 13**
**D-4049 Rommerskirchen (DE)**

**EP 0 158 953 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue Triamine mit Dicyclohexylmethan-Struktur, ein Verfahren zu ihrer Herstellung durch katalytische Hydrierung der ihnen zugrundeliegenden aromatischen Triamine, sowie ihre Verwendung als Vernetzer bzw. Härter für Epoxidgruppen oder Isocyanatgruppen aufweisende Kunststoffe bzw. Kunststoffvorläufer.

Primäre und sekundäre aliphatische oder insbesondere aromatische Di- und Polyamine können als Vernetzer oder Kettenverlängerer von Isocyanatgruppen aufweisenden Verbindungen bei der Herstellung von Polyurethan-kunststoffen verwendet werden (vgl. Becker/Braun, Kunststoffhandbuch 7, Polyurethane, Carl Hanser Verlag, München (1983), Seite 100).

Geradkettige aliphatische Polyamine wie Ethylendiamin, Diethylentriamin oder Dipropylentriamin werden in der Lackindustrie als Härter für Epoxidharze eingesetzt (vgl. z. B. H. Wagner, H. F. Sarx, Lackkunstharze, Carl Hanser Verlag München (1971), 5. Auflage, Seiten 181 bis 183). Cycloaliphatische Polyamine sind für das gleiche Einsatzgebiet geeignet und liefern Lackfilme, die relativ rasch trocknen, wasserfest und chemikalienbeständig sind (vgl. O. Lissner, Farbe und Lack, 66 (1960), Seite 18).

Mit der vorliegenden Erfindung werden nunmehr neue cycloaliphatische Triamine zur Verfügung gestellt, die einen, im Vergleich zu den bislang in der Polyurethan- und Epoxidharzchemie als Vernetzer eingesetzten Polyamine, verminderten Dampfdruck aufweisen und somit in gewerbehygienischer Hinsicht weitgehend unbedenklich sind, und die sich hervorragend als Vernetzer für Epoxidgruppen oder Isocyanatgruppen aufweisende Kunststoffe bzw. Kunststoffvorläufer eignen.

Gegenstand der Erfindung sind gegebenenfalls Stellung- und/oder Stereoisomerengemische darstellende Triamine der Formel (I)

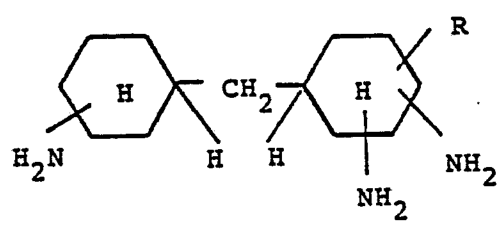

(I)

wobei R für Wasserstoff oder einen gegebenenfalls verzweigten Alkylrest mit 1 bis 4 Kohlenstoffatomen, vorzugsweise für Wasserstoff oder eine Methylgruppe steht.

Gegenstand der Erfindung ist auch ein Verfahren zur Herstellung dieser Triamine, welches dadurch gekennzeichnet ist, daß man die, den Triaminen der Formel (I) entsprechenden aromatischen Triamine einer katalytischen Perhydrierung unterwirft.

Gegenstand der Erfindung ist schließlich auch die Verwendung der neuen Triamine als Vernetzer bzw. Härter für Epoxidgruppen oder Isocyanatgruppen aufweisende Kunststoffe bzw. Kunststoffvorläufer.

Ausgangsmaterialien für das erfindungsgemäße Verfahren sind die den erfindungsgemäßen Triaminen entsprechenden aromatischen Triamine der allgemeinen Formel (II)

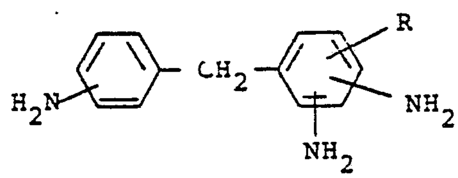

(II)

in welcher R die bereits genannte Bedeutung hat, vorzugsweise jedoch für Wasserstoff oder eine Methylgruppe steht.

Die Herstellung dieser aromatischen Triamine erfolgt in an sich bekannter Weise beispielsweise durch Umsetzung von N-[4(2)-Aminobenzyl]-anilin mit gegebenenfalls Alkyl-substituierten Phenylendiaminen gemäß Beilstein 13 H, Seite 309 bzw. gemäß DE-PS 107 718 oder durch Umsetzung (i) eines 3- oder 4-Nitrobenzylhalogenids, von Benzylalkohol oder eines Nitrobenzylchlorid-Isomerengemischs mit (ii) Nitrobenzol, alkylsubstituiertem Nitrobenzol, Alkylbenzol oder Benzol in Gegenwart eines Friedel-Crafts- oder eines Säurekatalysators, Nitrierung der so erhaltenen Umsetzungsprodukte zu den entsprechenden Trinitroverbindungen und Hydrierung der Nitrogruppen in Analogie zu EP-A-46 917. Die nach der letzgenannten Methode erhaltenen Trinitroverbindungen und die hieraus hergestellten aromatischen Triamine stellen, herstellungsbedingt, technische Gemische dar, die neben den entsprechenden trifunktionellen Verbindungen noch difunktionelle Verbindungen enthalten können. Aus diesen technischen Gemischen kann jedoch der geringe Anteil an difunktionellen Verbindungen gewünschtenfalls auf der Aminstufe destillativ entfernt werden.

Typische Beispiele geeigneter Ausgangsmaterialien für das erfindungsgemäße Verfahren sind

2,4,4′ (2′)-Triaminodiphenylmethan,
2,6,4′ (2′)-Triaminodiphenylmethan,
4,6,4′ (2′)-Triamino-3-methyl-diphenylmethan,
2,6,4′ (2′)-Triamino-3-methyl-diphenylmethan,
3,5,4′ (2′)-Triamino-4-methyl-diphenylmethan,
2,6,4′ (2′)-Triamino-4-methyl-diphenylmethan,
3,5,4′ (2′)-Triamino-2-methyl-diphenylmethan,
4,6,4′ (2′)-Triamino-2-methyl-diphenylmethan,

oder deren Gemische. Auch die entsprechenden Ethyl-, Isopropyl-, n-Propyl- oder m-, iso- oder tert.-Butyl-substituierten Triamino-diphenylmethane können eingesetzt werden.

Bevorzugte Ausgangsmaterialien sind jedoch Isomerengemische von methylsubstituierten Triaminodiphenylmethanen oder deren technischen Gemische mit den entsprechenden Diaminen, wie sie bei der Trinitrierung von 2- und/oder 4-Methyl-diphenylmethan bzw. von aus diesen Isomeren bestehenden Kohlenwasserstoffgemischen, Reduktion der Nitrogruppen und gegebenenfalls anschließender destillativer Aufarbeitung anfallen. Die besonders bevorzugten, nach dieser Verfahrensweise hergestellten Ausgangsmaterialien bestehen im allgemeinen zu über 80 Gew.-% aus Triaminodiphenylmethanen, die ihrerseits zu über 90 Gew.-% aus Aminobenzyl-diaminotoluol-Isomeren bestehen.

Wie oben ausgeführt, kann es sich bei den Ausgangsmaterialien für das erfindungsgemäße Verfahren ausschließlich um aromatische Triamine der Formel II bzw. und Gemische derartiger Triamine oder aber um Gemische derartiger Triamine mit den entsprechenden Diaminen handeln, welche vorzugsweise an jedem aromatischen Ring eine Aminogruppe aufweisen. In diesen Gemischen können bis zu 90, vorzugsweise bis zu 50 und insbesondere bis zu 20 Gew.-%, bezogen auf Gesamtgemisch, an solchen Diaminen vorliegen. Die herstellungsbedingt einen hohen Gehalt an derartigen aromatischen Diaminen aufweisenden Polyamingemischen können gegebenenfalls vor der Durchführung des erfindungsgemäßen Verfahrens ganz oder weitgehend destillativ von den Diaminen befreit werden. Es ist jedoch auch möglich, beim erfindungsgemäßen Verfahren die Gemische als solche einzusetzen, und anschließend die Hydrierungsprodukte destillativ von den Hydrierungsprodukten der Diamine und gegebenenfalls außerdem vorliegenden Nebenprodukten ganz oder teilweise zu befreien.

Die Kernhydrierung der aromatischen Polyamine erfolgt im allgemeinen nach den bekannten Methoden des Standes der Technik (vgl. P. Rylander, Catalytic Hydrogenation in Organic Syntheses, Academic Press New York, San Francisco, London (1979), Seite 190). Hierbei werden die aromatischen Amine bis zur vollständigen Wasserstoffaufnahme katalytisch hydriert. Die Hydrierung erfolgt bei 20 bis 300 °C unter einem Druck von 100 bis 300 bar insbesondere von 150 bis 250 °C und bei einem Druck von 70 bis 300 bar, insbesondere 120 bis 300 bar.

Die Hydrierung erfolgt in Gegenwart von 0,1 bis 30 Gew.-%, vorzugsweise von 0,1 bis 10 Gew.-%, bezogen auf katalytisch wirksames Metall einerseits und Diaminoverbindung andererseits, eines Hydrierungskatalysators. Geeignete Katalysatoren sind beispielsweise, gegebenenfalls auf inerten Trägern wie Aktivkohle, Kieselgel, Calciumcarbonat, Bariumsulfat und insbesondere Aluminiumoxid vorliegende Elemente der 8. Nebengruppe des Periodensystems der Elemente oder katalytisch wirksame anorganische Verbindungen dieser Elemente.

Besonders gut geeignet sind z. B. Ruthenium-, Platin-, Rhodium-, Nickel-, und/oder Kobaltkatalysatoren in elementarer oder chemisch gebundener Form. Besonders bevorzugt werden Ruthenium oder katalytisch wirksame Rhutheniumverbindungen eingesetzt. Beispiele geeigneter Rutheniumverbindungen sind Rutheniumoxid, Bariumperruthenit, Natrium-, Kalium-, Silber-, Calcium- oder Magnesiumruthenat, Natriumperruthenat, Rutheniumpentafluorid, Rutheniumtetrafluoridhydrat oder Rutheniumtrichlorid. Falls Trägersubstanzen für die Katalysatoren mitverwendet werden, beträgt der Metallgehalt des Trägerkatalysators im allgemeinen 1 bis 10 Gew.-%, vorzugsweise 1 bis 5 Gew.-%. Im übrigen ist selbstverständlich die Art und Menge des einzusetzenden Katalysators keineswegs wesentlich.

Es ist oft zweckmäßig, die Hydrierungsreaktion in Gegenwart von Ammoniak durchzuführen, da durch die Anwesenheit von Ammoniak unerwünschte Desaminierungsreaktionen und die Bildung von sekundären Aminen als Nebenprodukte unterdrückt werden können. Falls Ammoniak mitverwendet wird, geschieht dies in Mengen von 0,1 bis 30 Gew.-%, vorzugsweise 5 bis 10 Gew.-%, bezogen auf zu hydrierende Ausgangsmaterialien.

Die Hydrierung kann lösungsmittelfrei oder in Gegenwart inerter Lösungsmittel durchgeführt werden. Im allgemeinen werden niedrigschmelzende bzw. flüssige aromatische Amine in Substanz, hochschemelzende Diamine dagegen in gelöster Form hydriert. Als Lösungsmittel eignen sich unter den Reaktionsbedingungen inerte organische Verbindungen mit niedrigem Siedepunkt, vorzugsweise Alkohole wie Methanol, t-Butanol, Ethanol, n-Propanol, i-Propanol oder Ether wie z. B. Dioxan, Tetrahydrofuran oder Diethylether oder Kohlenwasserstoffe wie Cyclohexan.

Die Durchführung der Hydrierung findet kontinuierlich in einem Reaktionsrohr, einer Druckkesselkaskade oder vorzugsweise diskontinuierlich in einem Rührautoklaven statt, indem man den Autoklaven mit Katalysator, der zu hydrierenden Substanz und gegebenenfalls einem Lösungsmittel beschickt, mehrmals mit Inertgas spült und gegebenenfalls Ammoniak zudosiert. Danach drückt man Wasserstoff auf, bringt das Gemisch auf Reaktionstemperatur, hydriert bis Druckkonstanz erreicht ist und rührt während eines weiteren Zeitraums von ca. 0,5 bis 5 Stunden bei gleicher Temperatur. Nach Abkühlung des Reaktionsgemisches und Abtrennung des Katalysators wird das Hydrierprodukt im allgemeinen destillativ aufgearbeitet.

Die Hydrierungsprodukte fallen in hohen Ausbeuten an und lassen sich, wie ausgeführt, erforderlichenfalls destillativ von Nebenprodukten befreien. Auch nach einer derartigen destillative, Reindarstellung der erfindungsgemäßen Triamine stellen diese im allgemeinen Gemische von Stereo- und gegebenenfalls Stellungsisomeren dar. Durch die genannte destillative Aufarbeitung sind erfindungsgemäße Triamine zugänglich, die zu über 80, vorzugsweise zu über 90 Gew.-% aus Triaminen bestehen, die der allgemeinen Formel (I) entsprechen. Jedoch auch die nicht destillativ aufgearbeiteten erfindungsgemäßen Verfahrensprodukte stellen erfindungsgemäße Triamine dar, die jedoch nicht nur Stellungs- und/oder Stereoisomerengemische darstellen können, sondern darüberhinaus im Gemisch mit bis zu 90, vorzugsweise bis zu 50 und insbesondere bis zu 40 Gew.-% an anderen, gegebenenfalls alkylsubstituierten Di- und/oder Triaminen mit Diphenylmethan-, Benzyl-cyclohexan- oder Dicyclohexylmethan-Struktur vorliegen. Die genannten Diamine können dann in den erfindungsgemäßen Produkten vorliegen, wenn als Ausgangsmaterialien aromatische Triamine verwendet werden, die, wie oben ausgeführt, aromatische Diamine enthalten und/oder wenn es während der Hydrierungsreaktion im geringen Umfang zu einer Desaminierung des cycloaliphatischen Rings kommt. Eine derartige Desaminierung kann jedoch, wie oben ausgeführt, gegebenenfalls durch Mitverwendung von Ammoniak bei der Hydrierungsreaktion zurückgedrängt werden. Auch Monoamine können in ganz geringen Mengen durch Desaminierung entstehen. Sie können jedoch sehr leicht destillativ entfernt werden. Polyamine mit Diphenylmethan- oder Benzyl-Cyclohexan-Struktur liegen allenfalls bei nicht vollständig ablaufender Hydrierung in geringen Mengen in den Hydrierungsprodukten vor und beeinträchtigen im allgemeinen deren weitere Verwendbarkeit nicht.

Im bevorzugten Fall der Verwendung von aromatischen Triaminen mit einem Gehalt an aromatischen Diaminen von bis zu 50 und insbesondere bis zu 20 Gew.-% ist eine destillative Reindarstellung der erfindungsgemäßen Verfahrensprodukte vor ihrer erfindungsgemäßen Verwendung im allgemeinen nicht erforderlich, ebensowenig kommt es bezüglich der Verwendbarkeit der erfindungsgemäßen Verfahrensprodukte für die erfindungsgemäße Verwendung auf deren Stereo- und/oder Stellungsisomerie an.

Die erfindungsgemäßen Verfahrensprodukte sind nach ihrer gegebenenfalls erfolgten destillativen Reindarstellung als polyfunktionelle Amine interessante Vernetzer oder Härter für Epoxidgruppen oder Isocyanatgruppen-aufweisende Kunststoffe bzw. Kunststoffvorläufer. Sie werden bei dieser erfindungsgemäßen Verwendung anstelle der bislang üblicherweise hierfür eingesetzten Polyamine verwendet. Die besonders gute Eignung der erfindungsgemäßen Polyamine für die erfindungsgemäße Verwendung beruht u. a. auf der hohen Aminfunktionalität, dem niedrigen Dampfdruck und dem flüssigen Aggregatzustand der erfindungsgemäßen Verbindungen bzw. Gemische.

In den nachfolgenden Beispielen beziehen sich alle Prozentangaben, soweit nicht anderslautend vermerkt, auf Gewichtsprozente. Die Analytik erfolgte mittels Gaschromatographie.

## Beispiel 1

In einem 700 ml Rührautoklaven werden 380 g eines technischen Amingemischs bestehend aus 1,4 % 4,4'-Diaminodiphenylmethan, 10,2 % 4, 6, 2'-Triamino-3-methyldiphenylmethan, 6,8 % 2, 6, 4'-Triamino-3-methyldiphenylmethan, 78,7 % 4, 6, 4'-Triamino-3-methyldiphenylmethan und 2,9 % an anderen aromatischen Polyaminen, das durch Umsetzung von 2,4-Diaminotoluol mit technisch hergestelltem N-Aminobenzyl-anilin mit einem Gehalt an N-[4-Aminobenzyl]-anilin von über 80 %, in Gegenwart von Salzsäure (Protonierungsgrad : 50 %), anschließender Neutralisation des Katalysators mit Natronlauge und destillativer Aufarbeitung hergestellt worden war, 380 g tert.-Butanol und 76 g Ruthenium-Aluminiumoxid-Trägerkatalysator (5 % Ru) vorgelegt und nach mehrmaligen Spülen mit Stickstoff und Wasserstoff 100 bar Wasserstoff aufgedrückt. Man erhitzt den Autoklaveninhalt zuerst auf 130 °C (Schmelzpunkt des Amingemisches) betätigt den Rührer und erhöht die Temperatur auf 200 °C. Nun werden bei konstanter Temperatur 275 bar Wasserstoff aufgedrückt, bis nach 5,25 Stunden Druckkonstanz erreicht ist. Man läßt den Autoklaveninhalt auf ca. 60 °C abkühlen, entspannt den Autoklaven und nimmt das Rohprodukt in Methanol auf.

Der Katalysator wird abgenutscht und das Produkt destilliert. Bei einer Siedetemperatur von 115 bis 170 °C/0,9 mbar gehen 364,4 g eines Amingemisches über, das laut gaschromatographischer Analyse folgende Zusammensetzung besitzt :

30,3 % Diamino-methyldicyclohexylmethan (Isomerengemisch)
61,3 % Triamino-methyldicyclohexylmethan (Isomerengemisch)
8,4 % nichtidentifizierter Amine

Die genannten Triamine bestehen ausschließlich aus solchen, die eine Aminogruppe am unsubstituierten Cyclohexanring und zwei Aminogruppen am methylsusbtituierten Cyclohexanring aufweisen.

Nach einer weiteren Destillation wurden 164,0 g eines bei 139 bis 170°C/0,1 mbar siedenden Hydrierungsproduktes gewonnen, das nach gaschromatographischen Befund zu 92,1 % aus Triamino-methyldicyclohexylmethan-Isomeren der genannten Art besteht.

Beispiel 2

Einen 0,7 l Rührautoklaven beschickt man mit 14 g Ruthenium-Aluminiumoxid-Trägerkatalysator (5 % Ru) und 350 eines Kondensationsproduktes aus N-(4(2)-Aminobenzyl)-anilin und m-Phenyldiamin folgender Zusammensetzung :

2,2 % m-Phenylendiamin
0,6 % 2,6,4'-Triamino-diphenylmethan
14,5 % 2,4,2'-Triamino-diphenylmethan
82,7 % 2,4,4'-Triamino-diphenylmethan

Nach mehrmaligem Spülen mit Stickstoff und Wasserstoff dosiert man 39 g flüssigen Ammoniaks zu, drückt 100 bar Wasserstoff auf und erhitzt den Autoklaven auf 140 °C. Man hydriert nun unter Rühren mit 275 bar Wasserstoff, erhöht die Temperatur innerhalb von 23 Stunden auf 200 °C und hydriert weitere 7 Stunden bei gleicher Temperatur. Mann läßt den Autoklaven auf 60 °C abkühlen, entspannt und trennt den Katalysator durch Filtration über einer Drucknutsche bei 70 °C ab. Nach Destillation bei 127 bis 185 °C/0,4 mbar erhält man 337,5 g eines Gemisches cycloaliphatischer Amine folgender Zusammensetzung :

2,5 % Monoamino-dicyclohexylmethan (Isomerengemisch)
21,4 % Diamino-dicyclohexylmethan (Isomerengemisch)
74,6 % Triamino-dicyclohexylmethan (Isomerengemisch)
0,6 % 4-(2,4-Diaminobenzyl)-cyclohexylamin
0,9 % nicht identifizierter Amine

Durch erneute Destillation bei 127 bis 157 °C/0,2 bis 0,3 mbar werden 259,3 g eines Gemisches verschiedener Triaminodicyclohexylmethan-Isomere erhalten, das 8,5 % Diaminodicyclohexylmethan enthält. Bei den Triaminen handelt es sich um solche, die an einem Cyclohexanring zwei Aminogruppen und am anderen Cyclohexanring eine Aminogruppe als Substituenten enthalten.

Beispiel 3

350 g eines aromatischen Polyamingemischs bestehend aus 2,6 % Diaminotoluol (Isomerengemisch), 6,2 % Diaminomethyldyphenylmethan (Isomerengemisch, in welchem zu über 90 % solche Diamine vorliegen, die jeweils an einem aromatischen Ring einen Aminosubstituenten aufweisen) und 91,2 % Triaminomethyldiphenylmethan (Isomerengemisch in welchem zu über 90 % solche Triamine vorliegen, die eine Aminogruppe am unsubstituierten aromatischen Ring und zwei Aminogruppen am methylsubstituierten aromatischen Ring aufweisen), und welches durch Nitrierung von Methyldiphenylmethan und anschließende katalytische Hydrierung unter Verwendung von Raney-Nickel gemäß EP-A 46 917 hergestellt worden war, werden in Gegenwart von 35 g Ruthenium (5 %)-Aluminiumoxid-Trägerkatalysator und in Gegenwart von 35 g Ammoniak in einem 0,7 l Rührautoklaven bei 200 °C und 275 bar gemäß Beispiel 1 hydriert. Nach zweimaliger Destillation werden 69,2 g eines bei 132 bis 148 °C/0,1 mbar siedenden Hydrierprodukts isoliert, das zu 91 % aus Triaminomethyldicyclohexylmethan der Formel (I) (R = $CH_3$) und zu 9 % aus Diaminomethyldicyclohexylmethan besteht.

Beispiel 4

In einem 1,3 l Rührautoklaven werden 253 g (1,19 Mol) 2,4,4'-Triamino-diphenylmethan, hergestellt durch Umkristallisation des gemäß Beispiel 2 eingesetzten Ausgangsgemischs in 1,2-Dichlorbenzol, 250 ml tert.-Butanol und 50,6 g des in Beispiel 1 eingesetzten Katalysators vorgelegt. Nach mehrmaligem Spülen mit Stickstoff und Wasserstoff werden 100 bar Wasserstoff aufgedrückt, der Autoklaveninhalt auf 180 °C erhitzt und unter intensivem Rühren bei 275 bar hydriert. Nach 105 Minuten ist die Wasserstoffaufnahme beendet. Der Autoklav wird auf 60 °C abgekühlt, entspannt und die Lösung vom Katalysator abgesaugt. Nach Abdestillieren des Lösungsmittels wird das Rohprodukt bei 115-195 °C/0,5 mbar einer Flashdestillation unterworfen und 238,3 g Destillat gewonnen. Dieses besteht zu 81,5 % aus 2,4,4'-Triamino-dicyclohexylmethan, 16,1 % aus Diamino-dicyclohexylmethan und zum Rest aus undefinierten Polyaminen. Die Reindestillation dieses Produkts ergibt 175,4 g 2,4,4'-Triaminodicyclohexylmethan, das 2,3 % bezogen auf Gesamtgemisch, an Diamino-dicyclohexylmethan (Isomerengemisch) enthält und einen Siedepunkt von 147 bis 153 °C/0,2 mbar aufweist.

**Patentansprüche**

1. Gegebenenfalls Stellungs- und/oder Stereoisomerengemische darstellende Triamine der Formel (I)

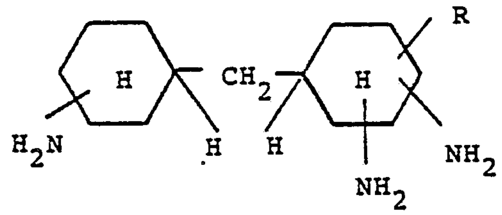

(I)

wobei R für Wasserstoff oder einen gegebenenfalls verzweigten Alkylrest mit 1 bis 4 Kohlenstoffatomen steht.

2. Verfahren zur Herstellung von Triaminen gemäß Anspruch 1, dadurch gekennzeichnet, daß man die, den Triaminen der Formel (I) entsprechenden aromatischen Triamine einer katalytischen Perhydrierung unterwirft.

3. Verwendung der Triamine gemäß Anspruch 1 als Vernetzer bzw. Härter für Epoxidgruppen oder Isocyanatgruppen aufweisende Kunststoffe bzw. Kunststoffvorläufer.

**Claims**

1. Triamines optionally representing position and/or stereo isomers and corresponding to the following formula

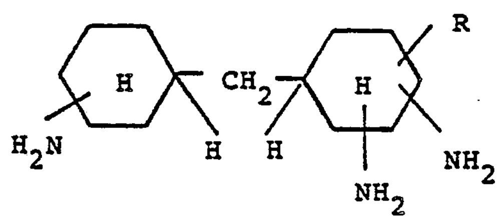

(I)

in which R represents hydrogen or an optionally branched $C_1$-$C_4$ alkyl radical.

2. A process for the production of triamines according to Claim 1, characterised in that the aromatic triamines corresponding to the triamines of formula (I) are subjected to catalytic perhydrogenation.

3. The use of the triamines according to Claim 1 as crosslinking agents or hardening agents for plastics containing epoxide groups or isocyanate groups or precursors thereof.

**Revendications**

1. Triamines constituant éventuellement des mélanges d'isomères de position et/ou de stéréoisomères, de formule (I)

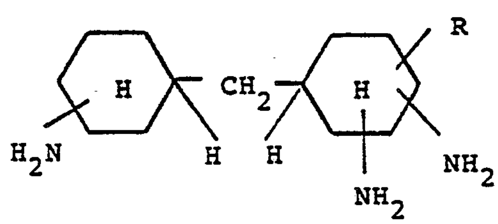

(I)

dans laquelle R représente de l'hydrogène ou un radical alcoyle éventüellement ramifié ayant 1 à 4 atomes de carbone.

2. Procédé de fabrication de triamines selon la revendication 1, caractérisé en ce qu'on soumet à une perhydrogénation catalytique les triamines aromatiques qui correspondent aux triamines de formule (I).

3. Utilisation des triamines selon la revendication 1 comme réticulants ou durcissants pour matières plastiques ou précurseurs de matières plastiques présentant des groupes époxy ou des groupes isocyanate.